# EUROPEAN PATENT APPLICATION

(11) **EP 2 902 737 A2**
(43) Date of publication of application: **05.08.2015**
(21) Application number: 15152293.5
(22) Date of filing: 23.01.2015
(51) Int. Cl.: F25J 3/04, F04D 17/14

(54) **Systems and methods for compressing air**

(30) Priority: 24.01.2014 US 201414162898
(71) Applicant: AIR PRODUCTS AND CHEMICALS, INC., Allentown, PA 18195-1501 (US)
(72) Inventor: Wang, Larry Lingzhi, Breinigsville, PA 18031 (US)
(74) Representative: Beck Greener

(57) **Abstract**

A system for compressing air includes: a variable speed driver having a drive shaft; at least one pre-main air compressor having at least one stage and adapted to receive and compress a flow of ambient or other air and to be driven by the drive shaft of the variable speed driver; at least one main air compressor having at least one stage on a first pinion shaft and adapted to receive and further compress a flow of compressed air transmitted from the at least one pre-main air compressor; at least one booster air compressor having at least one stage on a second pinion shaft and adapted to receive and further compress a flow of further compressed air transmitted from the at least one main air compressor; and another driver adapted to drive at least one of the first pinion shaft and the second pinion shaft through at least one transmission.

## Description

### BACKGROUND

Applicant's systems and methods relate to compressor arrangements and applications where high air flows from ambient air or other sources are required, such as in large cryogenic air separation units.

In a cryogenic air separation unit (ASU), feed air is passed through a main air compressor (MAC) to attain a desired pressure. The feed air is then cooled and water vapor and other gaseous impurities, such as carbon dioxide, are removed. Part or all of the feed air stream is then passed to a booster air compressor (BAC) to attain a desired pressure before the compressed air stream(s) is/are passed to the cryogenic part of the ASU for separation. The MAC and BAC usually each comprise more than one compression stage.

High flow rate process plant compressors typically include centrifugal (*i.e*., radial) compression stages. A centrifugal compression stage includes an impeller mounted for rotation within a shaped housing and a diffuser. Each compressor section includes an inlet and an outlet for the fluid being compressed. Impellers may be arranged either on multiple shafts or on a single shaft. Where multiple shafts are used, a large diameter bull gear drives meshing pinions (*i.e*., pinion shafts) upon the ends of which compression impellers are mounted. The multiple impellers within their own respective housings provide several stages of compression, as desired. The bull gear and the meshing pinions are usually contained within a common housing known as a gearbox. Consequently, such compressors are known as integrally geared compressors. The meshing pinions may have different diameters to best match the speed requirements of the compression impellers that they drive. The compressed air between any two stages may be piped to an external intercooler or pass through an intercooler inside the compressor casing, wherein the compressed air is cooled, thereby reducing gas power consumption.

It is known to compress air for an ASU using multiple compression stages, at least one of which is driven by an expander turbine. For example, European Patent Application Publication No. 0 672 877 A1 discloses a cryogenic air separation unit having three compression stages, at least one of which is driven by two or more expander turbines acting in parallel or series and linked for driving one or more compression stages via a bull gear.

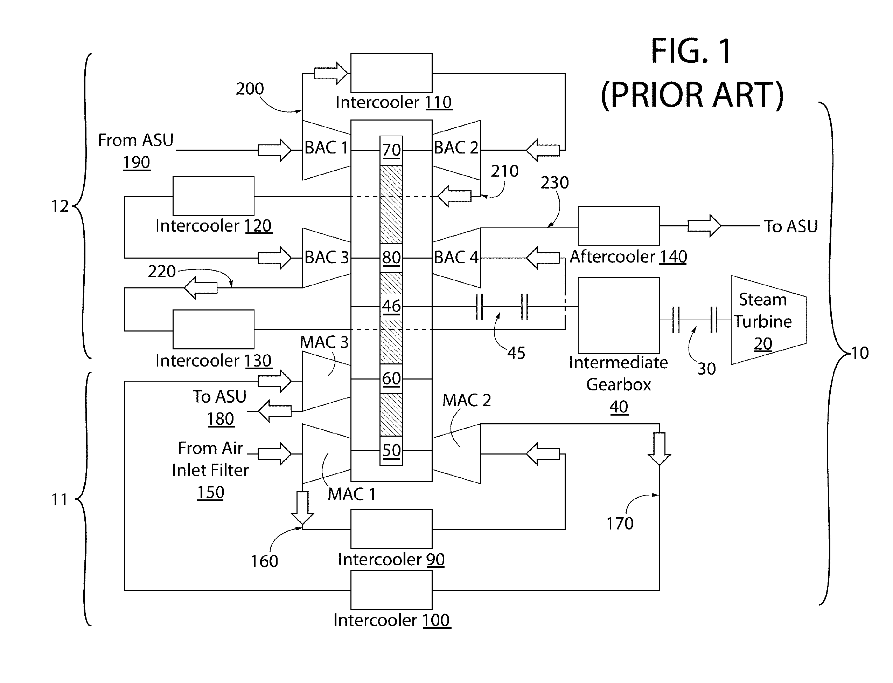

A typical compression arrangement for use in an ASU is shown in Figure 1. This arrangement has been applied for MAC suction flow rates up to 550,000 m³/h. The number of booster stages is limited to four.

Bull gear 46 of compression arrangement 10 is driven from steam turbine 20 through couplings 30 and 45 and an intermediate gearbox 40. MAC stages 11 and BAC stages 12 are driven from bull gear 46. There are three MAC compression stages (MAC1, MAC2, and MAC3), with MAC1 and MAC2 being driven from a first pinion 50 and MAC3 being driven from a second pinion 60. There also are four BAC compression stages (BAC1, BAC2, BAC3, and BAC4), with BAC1 and BAC2 being driven from a third pinion 70, and BAC3 and BAC4 being driven from a fourth pinion 80. The numbering of the MAC and BAC stages reflects the order in which fluid to be compressed will pass through the stages (*i.e*., fluid will pass successively through MAC1, MAC2, and MAC3, for example).

To improve the overall efficiency of the compression arrangement 10, intercoolers 90, 100, 110, 120, and 130 are provided between the MAC compression stages and between the BAC compression stages to remove heat from the compressed fluid. An aftercooler 140 is provided at the outlet of BAC4 to cool the compressed fluid to the temperature at which it is desired that the fluid enters the ASU (not shown).

In use, the air to be separated is fed into the first MAC compression stage MAC1 through air inlet filter 150 (not shown), is compressed typically to about 0.2 MPa (2 bar absolute or "bara"), and leaves MAC1 through line 160, then passes through intercooler 90 before entering the second compression stage MAC2 for further compression. The compressed air, typically at about 0.35 MPa (3.5 bara), then leaves MAC2 through line 170 and passes through intercooler 100 before entering the third compression stage MAC3. The compressed air, typically at about 0.6 MPa (6 bara), is then passed to the ASU purification systems *via* outlet 180 for cooling and removal of water vapor and other gaseous impurities, such as carbon dioxide.

After passage through the ASU purification systems, the air is passed to the BAC stages 12, entering the first BAC compression stage BAC1 by inlet 190 and exiting, typically at about 1.1 MPa (11 bara), through line 200. The compressed air is then passed through intercooler 110 for temperature reduction, and enters the second BAC compression stage BAC2. The air successively passes through BAC2 outlet line 210, typically at about 2 MPA(20 bara), intercooler 120, the third BAC compression stage BAC3, outlet line 220, typically at about 3.5 MPa (35 bara), intercooler 130, and the fourth BAC compression stage BAC4. The compressed air, typically at about 5.5 MPa (55 bara) is then passed *via* line 230 through aftercooler 140 to be brought to the desired temperature and enters the ASU for separation.

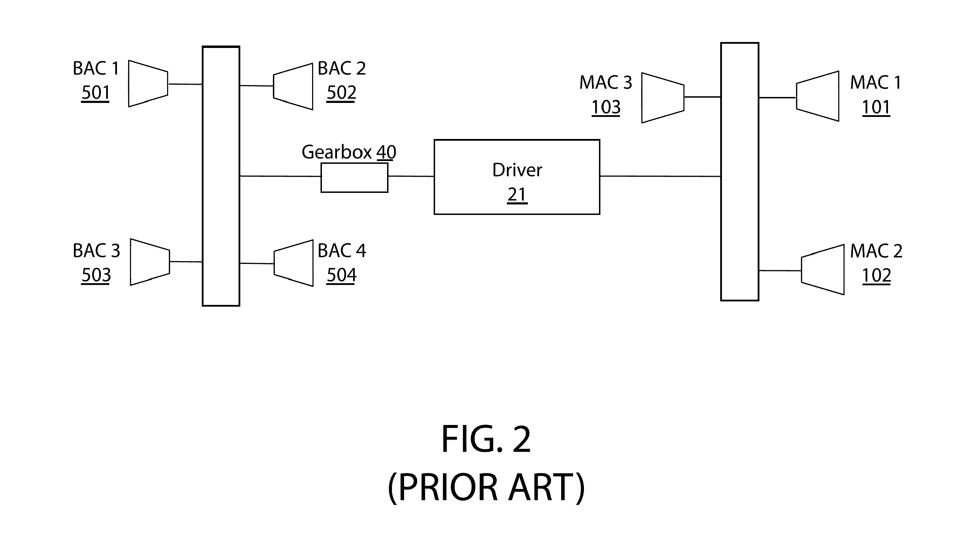

There are many other conventional compression arrangements, and variations thereof, used in ASUs. Some examples of such arrangements are illustrated in Figures 2 through 6. In these arrangements, air is compressed in the MAC stages from ambient pressure to a discharge pressure greater than 5 bara. The required discharge pressure depends on the site elevation, cryogenic cycle, heat exchangers, distillation columns, front end, piping used, etc.

Figure 2 illustrates a compression arrangement including an integrally geared centrifugal MAC that has three MAC compression stages (MAC1, MAC2, and MAC3) (101, 102, and 103) mounted on two high-speed pinion shafts driven by a driver 21. A gearbox 40 is used between the driver 21 and the bull gear of an integrally geared centrifugal BAC. This arrangement has one suction inlet that takes air at ambient condition for up to 550,000 m³/hr flow rate. Limiting factors on flow capacity may include required space between the two pinions and between a pinion and the bull gear, rotordynamics, mechanical losses, overall dimensions, overall weight, overall cost, etc. All MAC compression stages are on the same power train. Therefore, once a design speed is selected for the driver 21, there is little room to change the speed, since any speed change will impact all of the MAC compression stages. The MAC stages and the BAC stages may be driven by two different drivers, although it becomes common that both the MAC and the BAC stages are driven by a same driver 21, as shown in Figure 2. If the MAC and the BAC stages are driven by the same driver 21, then speeds of all of the MAC and the BAC stages are coupled, meaning that the speed of one stage cannot be changed without effecting the other stages.

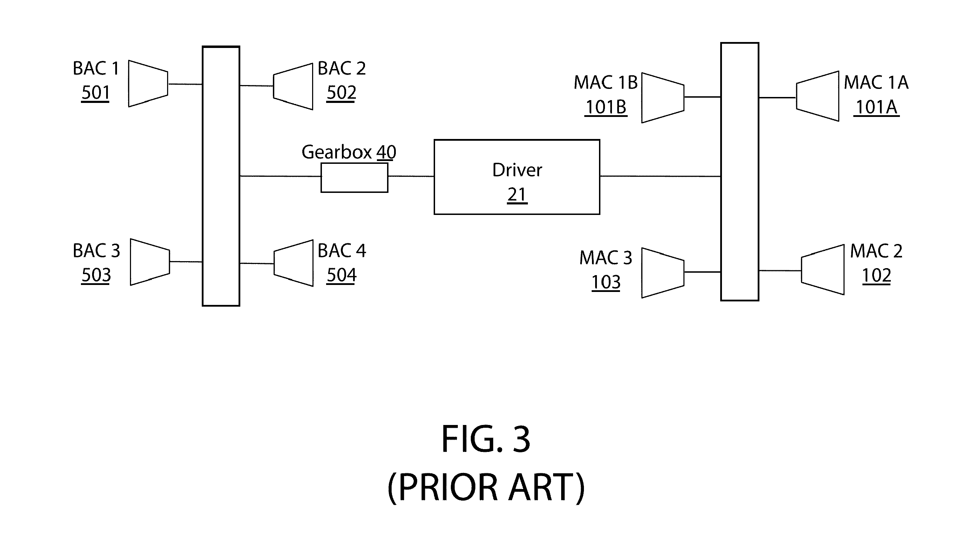

Figure 3 illustrates a compression arrangement including an integrally geared centrifugal MAC that has three MAC compression stages (MAC1A and MAC1 B, MAC 2, and MAC3) (1 01A, 101 B, 102, and 103) mounted on two high-speed pinion shafts driven by a driver 21. A gearbox 40 is used between the driver 21 and the BAC. This arrangement has two same size suction inlets that take air at ambient condition for up to 800,000 m³/hr flow rate in total. Limiting factors on flow capacity may include the required space between two pinions and between a pinion shaft and the bull gear, rotordynamics, mechanical losses, overall dimensions, overall weight, overall cost, etc. In addition, at the suction inlets, a reasonably long (*e.g.,* 4 X pipe diameter or more) straight inlet piping run is preferred or required to avoid inducing turbulence and allow a piping sectional change so that the surge taps can function properly. Such requirement imposes extra challenges for the second main suction close to the driver. All MAC compression stages are on the same power train. Therefore, once a design speed is selected for the driver 21, there is little room to change the speed, since any speed change will impact all of the MAC compression stages. The MAC stages and the BAC stages may be driven by two separate drivers, although it becomes common that both the MAC and the BAC stages are driven by the same driver 21, as shown in Figure 3. When the MAC and the BAC stages are driven by the same driver 21, all of the MAC stages and all of the BAC stages are related, meaning any speed change of the driver 21 would impact all of the MAC stages and all of the BAC stages.

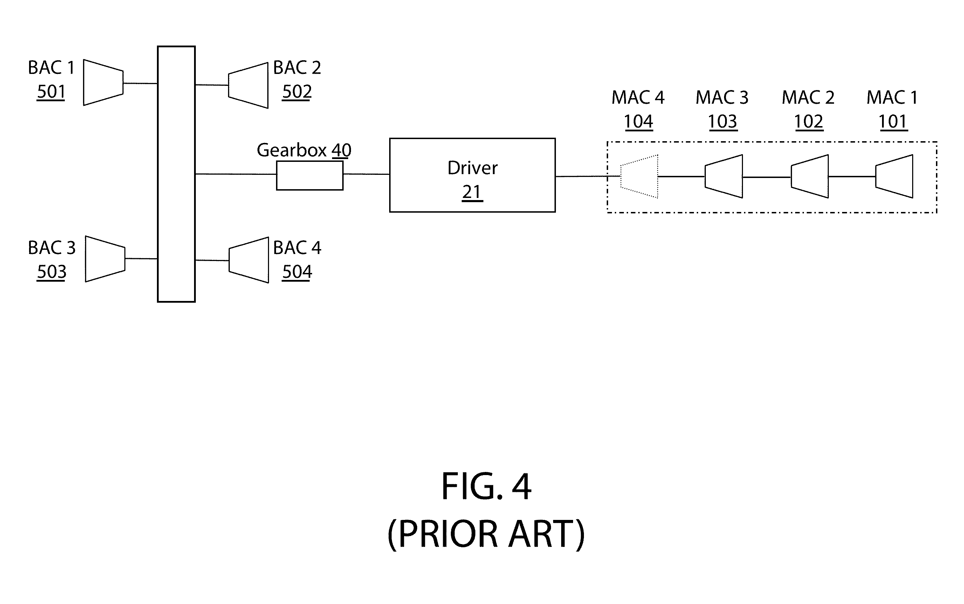

Figure 4 illustrates a compression arrangement including a single shaft centrifugal MAC that has three or more MAC compression stages (MAC1, MAC2, MAC3, and *MAC4*) (101, 102, 103 and 104) mounted on one shaft. This arrangement has one suction inlet that takes air at ambient condition for up to 650,000 m³/hr flow rate. Limiting factors on flow capacity may include impeller sizes that can be manufactured with current tooling, stress limit or tip speed limit, rotordynamics, overall dimensions, overall weight, overall cost, etc. All MAC compression stages are on the same shaft. Therefore, once a design speed is selected for the driver 21, there is little room to change the speed, since any speed change will impact all of the MAC compression stages. It is common that the MAC stages and the BAC stages are driven by the same driver 21, as shown in Figure 4. In this case, any speed change on the driver 21 will impact all of the MAC stages as well as all of the BAC stages.

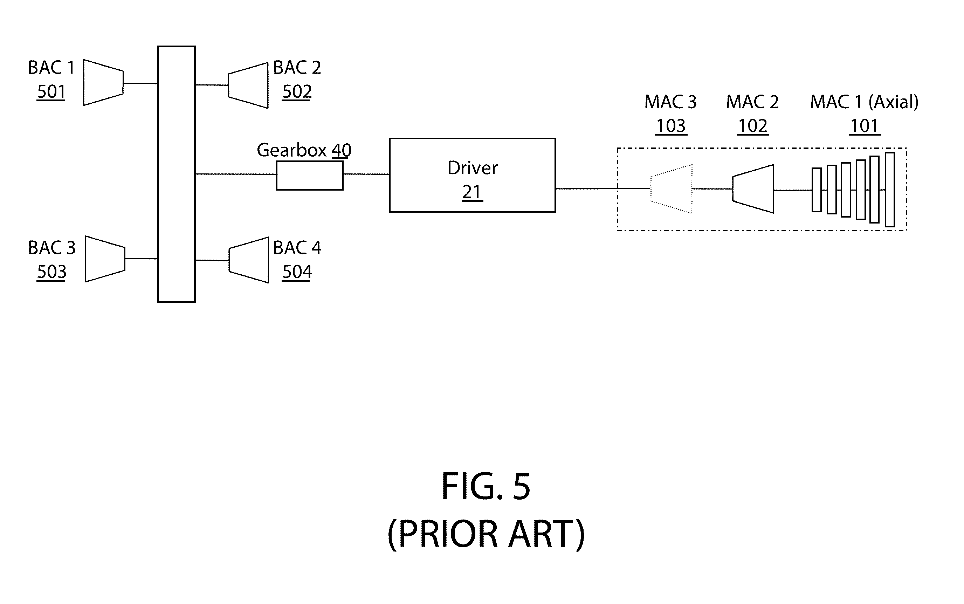

Figure 5 illustrates a compression arrangement including a single shaft axial-radial MAC that has six axial MAC compression stages (MAC1) (101) and one or more centrifugal MAC compression stages (MAC2 and *MAC3*) (102 and 103) mounted on one shaft. This arrangement has one suction inlet that takes air at ambient condition for up to 1,000,000 m³/hr flow rate or more. There is no inter-stage cooling in the axial compression section due to rotordynamics and cost constraints, and therefore, the compressor power consumption would be higher than an equivalent isothermal compressor. An isothermal compressor means there is inter-stage cooling after each compression stage. All MAC compression stages are on the same shaft. Therefore, once a design speed is selected for the driver 21, there is little room to change the speed since any speed change will impact all of the MAC compression stages. When the MAC and the BAC compression stages are driven by the same driver 21, as shown in Figure 5, any speed change of the driver 21 will impact all of the MAC compression stages as well as all of the BAC compression stages.

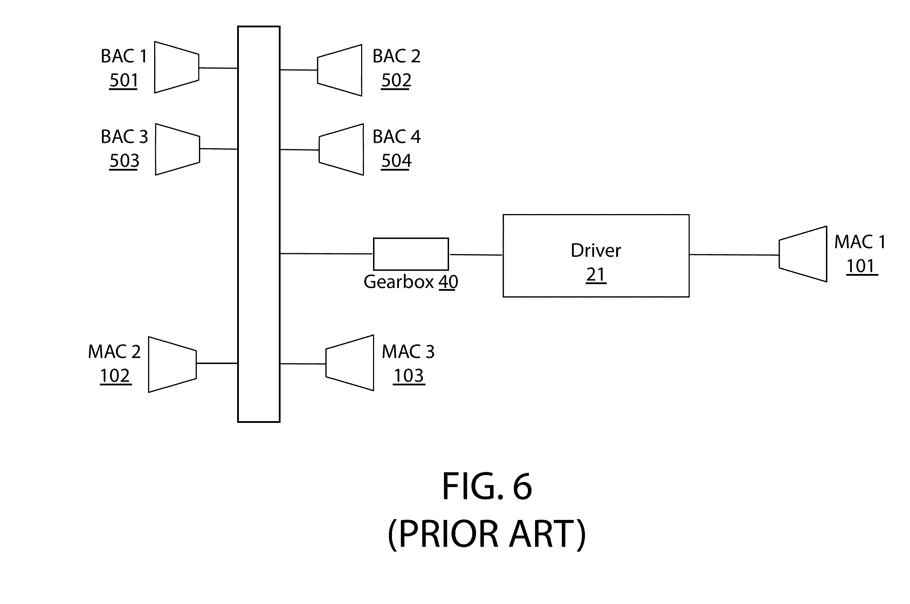

Figure 6 illustrates another compression arrangement. The first MAC compression stage (MAC1)(101) is driven on one end of a driver 21, while an integrally geared centrifugal compressor contains two remaining MAC compression stages (MAC2 and MAC3)(102 and 103) on one high-speed pinion shaft. The two remaining MAC compression stages are combined with four BAC compression stages (BAC1, BAC2, BAC3, and BAC4)(501, 502, 503, and 504) on the same machine. Generally, there can be up to four high-speed pinion shafts and up to eight stages in total in a combined MAC/BAC compressor. A gearbox 40 is used between the driver 21 and the combined MAC/BAC (MAC 2, MAC3, BAC1, BAC2, BAC 3, and BAC 4). This arrangement has one suction inlet that takes air at ambient condition. The maximum flow of this arrangement is to be determined by relevant machinery suppliers. The maximum flow capacity of this arrangement will be limited by centrifugal impeller size that can be manufactured by Original Equipment Manufacturers (OEMs) and the allowable impeller tip speed. All MAC compression stages are on a same power train. Therefore, once a design speed is selected for the driver 21, there is little room to change the speed, since any speed change will impact all of the MAC compression stages as well as all of the BAC compression stages that are on the same power train.

Major challenges common to all of the compression arrangements illustrated in Figures 1-6 are:
1. How to increase flow capacity without sacrificing efficiency;
2. How to handle various operating conditions more effectively to achieve yearly power savings, including reduce venting for turndown; and
3. How to achieve compression train cost reduction through standardization.

### BRIEF SUMMARY

There are various aspects of Applicant's apparatus and methods, and many possible embodiments of each aspect.

One aspect of the invention is a system for compressing air. The system includes a variable speed driver, at least one pre-main air compressor, at least one main air compressor, at least one booster air compressor, and at least one other driver. The variable speed driver has at least one drive shaft. The at least one pre-main air compressor has at least one stage and is adapted to receive and compress a flow of ambient air or other air and to be driven by the at least one drive shaft of the variable speed driver. The at least one main air compressor has at least one stage on a first pinion shaft and is adapted to receive and further compress at least a portion of a flow of compressed air transmitted from the at least one pre-main air compressor. The at least one booster air compressor has at least one stage on a second pinion shaft and is adapted to receive and further compress at least a portion of a flow of further compressed air transmitted from the at least one main air compressor. The at least one other driver is adapted to drive at least one of the first pinion shaft and the second pinion shaft directly or indirectly through at least one transmission.

In an embodiment of the system, a first drive shaft of the variable speed driver drives a first pre-main air compressor at a variable speed, and a second drive shaft of the variable speed driver drives a second pre-main air compressor at the variable speed. At least one of the first pre-main air compressor and the second pre-main air compressor may be a centrifugal air compressor.

In an embodiment of the system, a first stage of the at least one main compressor on the first pinion shaft is adapted to receive and further compress the at least a portion of the flow of compressed air transmitted from the at least one pre-main air compressor (preferably at a pre-defined discharge pressure), and a second stage of the at least one main air compressor on the first pinion shaft is adapted to receive and further compress at least a portion of a flow of further compressed air transmitted from the first stage of the at least one main air compressor.

In an embodiment of the system, a first stage of the at least one booster air compressor on the second pinion shaft is adapted to receive and further compress the at least a portion of the flow of further compressed air transmitted from the at least one main air compressor, and a second stage of the at least one booster air compressor on the second pinion shaft is adapted to receive and further compress at least a portion of the flow of further compressed air transmitted from the first stage of the at least one booster air compressor.

In another embodiment of the system, which may be in accordance with any of the embodiments discussed in the previous four paragraphs, the at least one transmission includes at least one bull gear.

In another embodiment, which may be in accordance with any of the embodiments discussed above, the system further comprises at least one supplementary booster air compressor having at least one stage on a third pinion shaft and that is adapted to receive and further compress at least a portion of a flow of further compressed air transmitted from the at least one booster air compressor, wherein the at least one other driver or another driver is adapted to drive at least one of another drive shaft, the first pinion shaft, the second pinion shaft, and the third pinion shaft directly or indirectly through the at least one transmission or another transmission.

In an embodiment of the system, a first stage of the at least one supplementary booster air compressor on the third pinion shaft is adapted to receive and further compress at least a portion of the flow of further compressed air transmitted from the at least one booster air compressor (such as from a second stage of the at least one booster air compressor), and a second stage of the at least one supplementary booster air compressor on the third pinion shaft is adapted to receive and further compress at least a portion of a flow of further compressed air transmitted from the first stage of the at least one supplementary booster air compressor.

In another embodiment, which may be in accordance with any of the embodiments discussed above, the system further comprises at least one cooler, each cooler being adapted to cool at least one of at least a portion of the flow of compressed air transmitted from the at least one pre-main air compressor, at least a portion of the flow of further compressed air transmitted from the at least one main air compressor, and at least a portion of a flow of further compressed air transmitted from the at least one booster air compressor.

Another aspect of the invention is a system for compressing air that comprises a variable speed driver, a first pre-main centrifugal air compressor, a second pre-main centrifugal air compressor, a manifold, a main air compressor, a booster air compressor, a supplementary booster air compressor, one other driver, and at least one cooler. The variable speed driver has a first drive shaft and a second drive shaft. The first pre-main centrifugal air compressor has at least one stage and is adapted to receive and compress a first flow of ambient air and to be driven at a first variable speed by the first drive shaft of the variable speed driver. The second pre-main centrifugal air compressor has at least one stage and is adapted to receive and compress a second flow of ambient air and to be driven at the first variable speed by the second drive shaft of the variable speed driver. The manifold is adapted to receive and combine at least a portion of a first flow of compressed air from the first pre-main centrifugal air compressor and at least a portion of a second flow of compressed air from the second pre-main centrifugal air compressor. The main air compressor has a first and a second stage. The first stage is on a first pinion shaft and is adapted to receive and further compress at least a portion of a flow of compressed air transmitted from the manifold at a pre-defined discharge pressure. The second stage of the main air compressor is on the first pinion shaft and is adapted to receive and further compress at least a portion of a flow of further compressed air transmitted from the first stage of the main air compressor. The booster air compressor has a first stage and a second stage. The first stage is on a second pinion shaft and is adapted to receive and further compress at least a portion of a flow of further compressed air transmitted from the main air compressor. The second stage of the booster air compressor is on the second pinion shaft and is adapted to receive and further compress at least a portion of a flow of further compressed air transmitted from the first stage of the booster air compressor. The supplementary booster air compressor has a first stage and a second stage. The first stage is on a third pinion shaft and is adapted to receive and further compress at least a portion of a flow of further compressed air transmitted from the second stage of the booster air compressor. The second stage of the supplementary booster air compressor is on the third pinion shaft and is adapted to receive and further compress at least a portion of a flow of further compressed air transmitted from the first stage of the supplementary booster air compressor. The one other driver is adapted to drive at least one of another drive shaft, the first pinion shaft, the second pinion shaft, and the third pinion shaft directly or indirectly through at least one of a bull gear and another transmission. Each cooler is adapted to cool at least one of at least a portion of the first and second flows of compressed air transmitted from the first and second pre-main centrifugal air compressors, at least a portion of each flow of further compressed air transmitted from each stage of the main air compressor, at least a portion of each flow of further compressed air transmitted from each stage of the booster air compressor, and at least a portion of each flow of further compressed air transmitted from each stage of the supplementary booster air compressor.

Another aspect of the invention is a method for compressing air, which includes eight steps. The first step is to transmit a flow of ambient air or other air to at least one pre-main air compressor having at least one stage. The second step is to drive the at least one pre-main air compressor with a variable speed driver having at least one drive shaft. The third step is to compress the flow of ambient air or other air in the at least one pre-main air compressor, thereby producing a flow of compressed air from the at least one pre-main air compressor. The fourth step is to transmit at least a portion of the flow of compressed air from the at least one pre-main air compressor to at least one main air compressor having at least one stage on a first pinion shaft. The fifth step is to compress further the at least a portion of the flow of compressed air in the at least one main air compressor, thereby producing a flow of further compressed air from the at least one main air compressor. The sixth step is to transmit at least a portion of the flow of further compressed air from the at least one main air compressor to at least one booster air compressor having at least one stage on a second pinion shaft. The seventh step is to compress further the at least a portion of the flow of further compressed air in the at least one booster air compressor, thereby producing a flow of further compressed air from the at least one booster air compressor. The eighth step is to drive at least one of the first pinion shaft and the second pinion shaft with at least one other driver directly or indirectly through at least one transmission.

In an embodiment of the method, a first drive shaft of the variable speed driver drives a first pre-main air compressor at a variable speed, and a second drive shaft of the variable speed driver drives a second pre-main air compressor at the variable speed. At least one of the first pre-main air compressor and the second pre-main air compressor may be a centrifugal air compressor.

In an embodiment of the method, a first stage of the at least one main air compressor on the first pinion shaft receives and further compresses the at least a portion of the flow of compressed air transmitted from the at least one pre-main air compressor (preferably at a pre-defined discharge pressure), and a second stage of the at least one main air compressor on the first pinion shaft receives and further compresses at least a portion of a flow of further compressed air transmitted from the first stage of the at least one main air compressor.

In an embodiment of the method, a first stage of the at least one booster air compressor on the second pinion shaft receives and further compresses the at least a portion of the flow of further compressed air transmitted from the at least one main air compressor, and a second stage of the at least one booster air compressor on the second pinion shaft receives and further compresses at least a portion of a flow of further compressed air transmitted from the first stage of the at least one booster air compressor.

In another embodiment of the method, which may be in accordance with any of the embodiments discussed in the previous four paragraphs, the at least one transmission includes at least one bull gear.

In another embodiment, which may be in accordance with any of the embodiments discussed above, the method further comprises two additional steps. The first additional step is to transmit at least a portion of the flow of further compressed air from the at least one booster air compressor to at least one supplementary booster air compressor having at least one stage on a third pinion shaft. The second additional step is to compress further the at least a portion of the flow of further compressed air from the at least one booster air compressor, thereby producing a flow of further compressed air from the supplementary booster air compressor. The at least one other driver or another driver drives at least one of another drive shaft, the first pinion shaft, the second pinion shaft, and the third pinion shaft directly or indirectly through the at least one transmission or another transmission.

In an embodiment of the method, a first stage of the at least one supplementary booster air compressor on the third pinion shaft receives and further compresses a portion of the flow of further compressed air transmitted from the at least one booster air compressor (such as from a second stage of the at least one booster air compressor), and a second stage of the at least one supplementary booster air compressor on the third pinion shaft receives and further compresses at least a portion of a flow of further compressed air transmitted from the first stage of the at least one supplementary booster air compressor.

In another embodiment, which may be in accordance with any of the embodiments discussed above, the method further comprises an additional step of cooling with at least one cooler at least one of at least a portion of the flow of compressed air transmitted from the at least one pre-main air compressor, at least a portion of the flow of further compressed air transmitted from the at least one main air compressor, and at least a portion of a flow of further compressed air transmitted from the at least one booster air compressor.

Another aspect of the invention is a is a method for compressing air that comprises 18 steps. The first step is to transmit a first flow of ambient air to a first pre-main centrifugal air compressor having at least one stage. The second step is to drive the first pre-main centrifugal air compressor at a first variable speed with a first drive shaft of a variable speed driver. The third step is to transmit a second flow of ambient air to a second pre-main centrifugal air compressor having at least one stage. The fourth step is to drive a second pre-main centrifugal air compressor at the first variable speed with a second drive shaft of the variable speed driver. The fifth step is to compress the first flow of ambient air in the first pre-main centrifugal air compressor, thereby producing a first flow of compressed air at a pre-defined discharge pressure. The sixth step is to compress the second flow of ambient air in the second pre-main centrifugal air compressor, thereby producing a second flow of compressed air at the pre-defined discharge pressure. The seventh step is to combine in a manifold at least a portion of the first flow of compressed air from the first pre-main centrifugal air compressor and at least a portion of a second flow of compressed air from the second pre-main centrifugal air compressor. The eighth step is to transmit a flow of compressed air from the manifold to a main air compressor having a first stage on a first pinion shaft and a second stage on the first pinion shaft. The ninth step is to compress further in the first stage of the main air compressor at least a portion of the flow of compressed air transmitted from the manifold. The tenth step is to compress further in the second stage of the main air compressor at least a portion of a flow of further compressed air transmitted from the first stage of the main air compressor. The eleventh step is to transmit a flow of further compressed air from the main air compressor to a booster air compressor having a first stage on a second pinion shaft and a second stage on the second pinion shaft. The twelfth step is to compress further in the first stage of the booster air compressor at least a portion of a flow of further compressed air from the main air compressor. The thirteenth step is to compress further in the second stage of the booster air compressor at least a portion of a flow of further compressed air transmitted from the first stage of the booster air compressor. The fourteenth step is to transmit a flow of further compressed air from the booster air compressor to a supplementary booster air compressor having a first stage on a third pinion shaft and a second stage on the third pinion shaft. The fifteenth step is to compress further in the first stage of the supplementary booster air compressor at least a portion of the flow of further compressed air from the booster air compressor. The sixteenth step is to compress further in the second stage of the supplementary booster air compressor at least a portion of a flow of further compressed air transmitted from the first stage of the supplementary booster air compressor, thereby producing a flow of further compressed air from the supplementary booster air compressor. The seventeenth step is to drive at least one of another drive shaft, the first pinion shaft, the second pinion shaft, and the third pinion shaft with at least one other driver directly or indirectly through at least one of a bull gear and an other transmission. The eighteenth step is to cool with at least one cooler at least one of at least a portion of the first and second flows of compressed air transmitted from the first and second pre-main centrifugal air compressors, at least a portion of each flow of further compressed air transmitted from each stage of the main air compressor, at least a portion of each flow of further compressed air transmitted from each stage of the booster air compressor, and at least a portion of each flow of further compressed air transmitted from each stage of the supplementary booster air compressor.

### BRIEF DESCRIPTION OF THE DRAWINGS

Applicant's systems and methods will be described by way of example with reference to the accompanying drawings, in which:
Figure 1 is a schematic diagram of a conventional compression arrangement for use in an air separation unit (ASU);
Figure 2 is a schematic diagram of another conventional compression arrangement for use in an ASU;
Figure 3 is a schematic diagram of another conventional compression arrangement for use in an ASU;
Figure 4 is a schematic diagram of another conventional compression arrangement for use in an ASU;
Figure 5 is a schematic diagram of another conventional compression arrangement for use in an ASU;
Figure 6 is a schematic diagram of another conventional compression arrangement for use in an ASU; and
Figure 7 is a schematic diagram illustrating one embodiment of a compression arrangement for Applicant's systems and methods.

### DETAILED DESCRIPTION

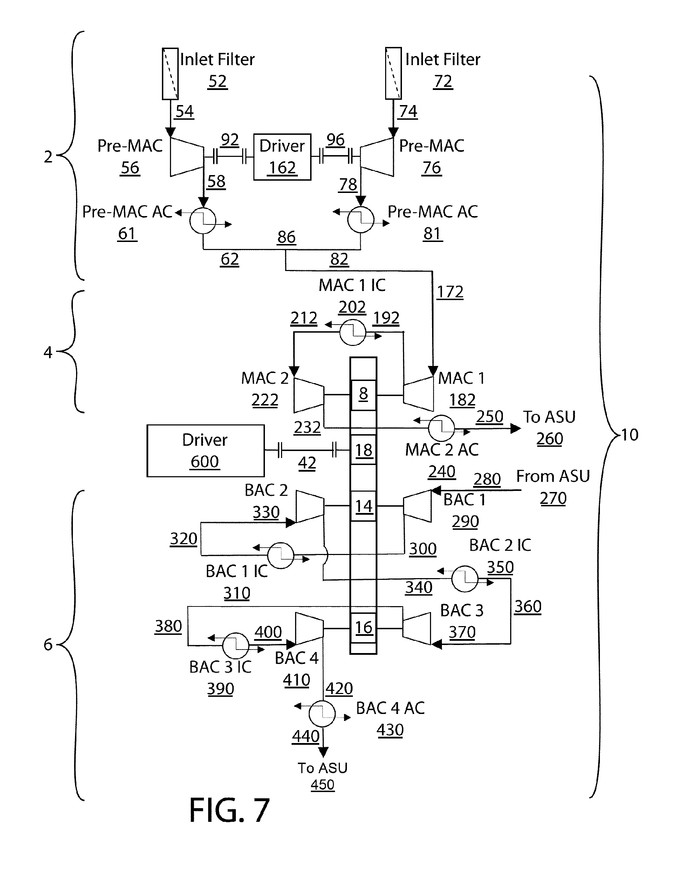

Figure 7 illustrates one exemplary embodiment of a compression arrangement 10 for Applicant's systems and methods of which there are many variations and many variants of the variations. The compression arrangement 10 includes Pre-MAC stages 2, MAC stages 4, and BAC stages 6. There are two Pre-MAC compressors (56 and 76), two MAC compression stages (MAC1 and MAC2)(182 and 222), and four BAC compression stages (BAC1, BAC2, BAC3, and BAC4) (290, 330, 370, and 410).

Referring to the exemplary embodiment illustrated in Figure 7, a variable speed driver (162) (*e*.*g*., a steam turbine or a variable speed motor) drives two single stage centrifugal pre-main air compressors (Pre-MAC) 56, 76 through two couplings 92, 96. The first Pre-MAC compressor 56 takes air from ambient (or another source), pulls the air through an inlet air filter 52 and inlet line 54, and compresses the air to about 2 bara. The compressed air is routed by line 58 to a Pre-MAC after-cooler (Pre-MAC AC) 61 and the cooled air is routed by line 62 to a manifold 86. The second Pre-MAC compressor 76 takes air from ambient (or another source), pulls the air through a second inlet air filter 72 and inlet line 74, and compresses the air to about 2 bara. The compressed air is routed by line 78 to the second Pre-MAC after-cooler (Pre-MAC AC) 81 and the cooled air is routed by line 82 to the manifold 86.

The compressed and cooled air (at about 2 bara) from the Pre-MAC after coolers 61, 81 is fed through line 172 to the first MAC compression stage MAC1 (182) where it is further compressed and then fed through line 192 to the interstage cooler 202 (MAC1 IC) of MAC1. The cooled air from the interstage cooler 202 is fed through line 212 to the second MAC compression stage MAC2 (222) where it is further compressed, and then is routed through line 232 to the after cooler 240 (MAC2 AC) of MAC 2. The cooled air from after cooler 240 is routed by line 250 to an air separation unit (ASU) as ASU stream 260.

Preferably, the discharge pressure of Pre-MAC, or the inlet pressure of MAC, is a pre-defined pressure or constant pressure for any ambient pressure. However, persons skilled in the art will recognize that various other pressures are possible even though they may not provide the best economic benefits.

ASU stream 260 passes through purification units (not shown) and heat exchangers (not shown) and part of the ASU stream comes back as BAC inlet stream 270, which is routed through line 280 to the first BAC compression stage BAC1 (290), is further compressed, and is routed through line 300 to the interstage cooler 310 (BAC1 IC) of BAC1.

The cooled air from interstage cooler 310 is routed by line 320 to the second BAC compression stage BAC2 (330), is further compressed, and is routed by line 340 to the interstage cooler 350 (BAC2 IC) of BAC2.

Part or all of the cooled air from interstage cooler 350 is routed by line 360 to the third BAC compression stage BAC3 (370), is further compressed, and is routed by line 380 to the interstage cooler 390 (BAC3 IC) of BAC3.

The cooled air from interstage cooler 390 is routed by line 400 to the fourth BAC compression stage BAC4 (410), is further compressed, and is routed by line 420 to the after cooler 430 (BAC4 AC) of BAC4. The cooled air from the after cooler 430 is routed by line 440 and goes to ASU stream 450 for further processing.

In the compression arrangement 10 of the exemplary embodiment illustrated in Figure 7, MAC1 (182) and MAC2 (222) are both on a first pinion shaft 8. BAC1 (290) and BAC2 (330) are both on a second pinion shaft 14. BAC3 (370) and BAC4 (410) are both on a third pinion shaft 16. The second driver 600 drives combined MAC stages 4 and BAC stages 6 on pinion shafts 8, 14, and 16 through a coupling 42 [and optionally also through a gearbox (not shown), if needed] and a drive shaft which may be the shaft of the bull gear 18.

If, for example, the BAC stages 6 has additional stages beyond four stages (*e.g.,* five or six stages), the extra stage(s) beyond four may be included in the combined MAC1 stages 4 and BAC stages 6 with an additional pinion shaft.

The design speed at which the variable speed driver 162 drives the Pre-MAC compressors 56, 76 is optimized based on site elevation and site average ambient temperature to achieve the best efficiency and the lowest power consumption. A variable inlet guide vane (IGV) and/or a variable diffuser may be used in combination with variable speed adjustments to handle other process duty conditions to reduce power consumption more effectively for those process conditions.

Applicant's systems and methods address at least in part three challenges common to the conventional compression arrangements illustrated in Figures1-6 in at least several ways, including:
- Applicant's systems and methods use two main suctions that take air from ambient or other source, and thereby double the flow capacity that can be handled by the conventional compression arrangements in Figures 1, 2, 4, and 6, which have only one main suction that takes air from ambient;
- Applicant's systems and methods eliminate the space and dimension constraints imposed by the compression arrangement illustrated in Figure 3, since Applicant's systems and methods use a stand-alone power train that does not have any adjacent stage or compressor scroll to interfere with it. As a result, Applicant's systems and methods can handle much higher flows (>1,000,000 m³/hr);
- Applicant's systems and methods save power since Pre-MAC is driven by a variable speed drive without any mechanical loss associated with a gearing; and
- Applicant's systems and methods provide an isothermal compression which uses less power, as shown by Example 1 in the "EXAMPLES" section below.

For any given site, while the air inlet pressure is constant, the air inlet temperature can vary significantly from winter to summer, leading to considerable variation on volumetric flow and variation on head. Volumetric flow and head increase with the inlet temperature.

As previously explained above, for all conventional compression arrangements, the MAC stages (and all BAC stages for all large machines) are on the same power train; and therefore, once the design speed is selected, there is little room to change this speed to accommodate seasonal temperature and/or production changes. Thus, the most effective compressor performance control variable, *i.e.,* speed, is not a degree of freedom to use for conventional compression arrangements. To handle the required flow and the head for the summer high temperature condition, MAC will need to be sized for the summer high temperature condition and IGV will be partially closed to handle normal operating conditions. This could reduce the compressor efficiency for other operating conditions and its turndown range (*i.e*., the range from the design flow to the minimum allowable flow without compressor surge). During winter or turndown conditions, the volumetric flow reduces significantly compared to the flow for the summer high temperature condition, and, therefore, the IGV has to be closed further and the compressed air may have to be vented to the atmosphere to prevent the compressor from surging. Both will lead to power waste.

In contrast, a compression arrangement using Pre-MAC has its own stand-alone variable speed as a true degree of freedom. For summer high temperature condition, the speed can be increased; and for winter or turndown condition, the speed can be reduced. Variable IGV and a variable diffuser (if needed) can further enhance the range of operation. The compressor efficiency for other operating conditions will be better in comparison with conventional arrangements. Venting can be completely eliminated, resulting in additional power savings.

Air inlet pressure of MAC may vary considerably with elevation among different sites. Average air inlet temperature may also vary considerably with climate condition among different sites. For example, if a MAC is moved from a site where the inlet pressure is 1.01 bara and the average inlet temperature is 7.2°C to another site where the inlet pressure is 0.852 bara and the average inlet temperature is 20°C, the inlet volumetric flow would be increased by more than 25%, and first stage head would be increased by more than 34%, for the same air separation products and cryogenic process cycle.

As previously discussed above, all MAC stages in conventional arrangements are on the same power train. Once the speed is selected, there is little room to change the speed. As a result, the most effective compressor performance control variable, *i.e.,* speed, is not a degree of freedom for a given MAC hardware. For a site with high elevation and/or high average inlet temperature, the design speed needs to be higher for the first stage for a given MAC hardware. However, any speed increase will be applied to all MAC stages as well as BAC stages on the same power train, and therefore, will not work for a given cryogenic process cycle and ASU design. For these reasons, conventional arrangements have to be customized for each site.

In contrast, a compression arrangement using Pre-MAC has its own stand-alone variable speed as a true degree of freedom. Pre-MAC can use higher design speeds for applications with high elevation and/or high average air inlet temperature and lower speeds for applications with sea level elevation and low average air inlet temperature, all with the same Pre-MAC hardware. Variable IGV and a variable diffuser (if needed) can further enhance Pre-MAC's capability to handle such variations. Pre-MAC can also cover a wider range of air separation products than conventional compression arrangements.

Regardless of site elevation and air inlet temperature, Pre-MAC feeds pre-processed "utility" air at almost constant pressure and temperature to MAC, and therefore, MAC can now be standardized.

### EXAMPLES

Flow capacity limitations on the compression arrangements in Figures 1, 2, 4, and 6 are directly set by the maximum flow capacity that can be handled by one centrifugal stage, since all of those arrangements have only one main inlet that takes air from ambient conditions.

The compression arrangement in Figure 5 has an axial compression section, and it can handle 1,000,000 m³/hr or even higher flow rate. However, because there is no inter-stage cooling within the axial compression section, the compressor power consumption is higher than an equivalent isothermal compression. See Example 1 below.

### Example 1

Air flow = 1,000,000 m³/hr
MAC inlet pressure = 0.879 bara
MAC inlet temperature = 29 °C
Relative Humidity = 55%
MAC discharge pressure = 5.85 bara

Assume that an axial-radial compressor, such as that illustrated in Figure 5, is used where a multistage axial section compresses air to 3.4 bara, and then a centrifugal stage compresses air from 3.4 bara to the final discharge pressure of 5.85 bara. In comparison to the axial compression section, a centrifugal stage compresses air from 0.879 bara to 2 bara, cools the discharge air to 40°C, and then compresses air to 3.4 bara using the second centrifugal stage. A comparison of the power consumption between the multistage axial compression section and two centrifugal stages with an interstage cooler follows:

| | Multistage Axial | Two Centrifugal Stages |
|---|---|---|
| Assumed Polytropic Efficiency (%) | 90.5 | 88 |
| Calculated Gas Power (KW) | 45,468 | 42,898 |
| Gas Power Saving (KW) | - | 2,570 |

As demonstrated in Example 1, although an axial-radial compressor arrangement like that illustrated in Figure 5 can handle higher flow, it needs higher gas power compared to an isothermal compressor.

The compression arrangement in Figure 3 has two suctions. Its current flow limit is 800,000 m³/hr and is unlikely to go above 1,000,000 m³/hr for the reasons previously discussed above for this arrangement. Also, when flow rate increases, the impeller size and scroll size increase proportionally. In order to maintain required space between adjacent scrolls, a bigger bull gear or addition of an idler is needed, leading to higher mechanical loss, increased weight and dimensions, and higher cost. The piping route of the second main inlet close to the driver will be more challenging when pipe size becomes larger.

### Example 2

For a MAC machinery compression arrangement of Figure 3, assume the total flow rate Q=800,000 m³/hr, *i.e.,* MAC 1A (101A) and MAC 1B (101B) each have a flow rate Q₁=400,000 m³/hr.
MAC inlet pressure = 0.879 BarA
MAC inlet temperature = 29 °C
Relative Humidity = 55%
MAC 1A and MAC 1 B discharge pressure = 2 bara

For an integrally geared centrifugal compressor with double suctions, as shown in Figure 3, MAC 1A (101A) and MAC 1B (101B) are on the same pinion shaft. Since this pinion shaft interacts with the bull gear, a mechanical gearing loss (typically around 2.5% of gas power, or maybe even higher to more than 5%) is incurred. For Applicant's Pre-MAC compression arrangement, the pre-MAC 56 and the pre-MAC 76 are directly driven by a variable speed driver 162 without any gearing, and therefore, there is no mechanical gearing loss. For MAC 1B (101B) on the driver side, as shown in Figure 3, a straight piping section of 6.8 m or longer and 1.7 m in diameter may be needed and will cause interference with the driver and block required access for maintenance. For Applicant's Pre-MAC compression arrangement, both suctions of Pre-MAC 56 and Pre-MAC 76 are facing away from the variable speed driver 162, and therefore, there is no possibility of interference with the driver.

| | Double Suction Integrally Geared MAC (Figure 3) | Pre-MAC (Figure 7) |
|---|---|---|
| Assumed Polytropic Efficiency (%) | 88 | 88 |
| Required Gas Power (KW) | 20,883 | 20,883 |
| Gearing Loss (assume 2.5%) | 522 | NA |
| Power Saving (KW) | - | 522 |
| Inlet Piping Diameter D (m) | 1.7 | 1.7 |
| Required Straight Piping Run 4 X D (m) | 6.8 | 6.8 |
| Interference On Driver Side | Yes | No |

Although illustrated and described herein with reference to one or more specific embodiments, Applicant's systems and methods are nevertheless not intended to be limited to the details shown. Rather, various modifications may be made in the details within the scope and range of equivalents of the claims and without departing from the spirit of the invention.

Applicant's systems and methods include many other aspects and variations thereof which are not illustrated in the drawings or discussed in the Detailed Description section. Those aspects and variations, however, do fall within the scope of the appended claims and equivalents thereof.

Persons skilled in the art will recognize that the embodiments and variations illustrated in the drawings and discussed in the Detailed Description section do not disclose all of the possible arrangements of Applicant's systems, and that other arrangements are possible. Accordingly, all such other arrangements are contemplated by Applicant's systems and methods, and are within the scope of the appended claims and equivalents thereof.

Persons skilled in the art also will recognize that many other embodiments incorporating Applicant's inventive concepts are possible, as well as many variations of the embodiments illustrated and described herein.

## Claims

1. A system for compressing air, comprising:
a variable speed driver having at least one drive shaft;
at least one pre-main air compressor having at least one stage and adapted to receive and compress a flow of ambient air or other air and to be driven by the at least one drive shaft of the variable speed driver;
at least one main air compressor having at least one stage on a first pinion shaft and adapted to receive and further compress at least a portion of a flow of compressed air transmitted from the at least one pre-main air compressor;
at least one booster air compressor having at least one stage on a second pinion shaft and adapted to receive and further compress at least a portion of a flow of further compressed air transmitted from the at least one main air compressor; and
at least one other driver adapted to drive at least one of the first pinion shaft and the second pinion shaft directly or indirectly through at least one transmission.

2. A system as in claim 1, wherein:
a first stage of the at least one main air compressor on the first pinion shaft is adapted to receive and further compress the at least a portion of the flow of compressed air transmitted from the at least one pre-main air compressor at a pre-defined discharge pressure, and
a second stage of the at least one main air compressor on the first pinion shaft is adapted to receive and further compress at least a portion of a flow of further compressed air transmitted from the first stage of the at least one main air compressor.

3. A system as in claim 1 or 2, wherein:
a first stage of the at least one booster air compressor on the second pinion shaft is adapted to receive and further compress the at least a portion of the flow of further compressed air transmitted from the at least one main air compressor, and
a second stage of the at least one booster air compressor on the second pinion shaft is adapted to receive and further compress at least a portion of a flow of further compressed air transmitted from the first stage of the at least one booster air compressor.

4. A system as in any preceding claim, further comprising:
at least one supplementary booster air compressor having at least one stage on a third pinion shaft and adapted to receive and further compress at least a portion of a flow of further compressed air transmitted from the at least one booster air compressor,
wherein the at least one other driver or another driver is adapted to drive at least one of another drive shaft, the first pinion shaft, the second pinion shaft, and the third pinion shaft directly or indirectly through the at least one transmission or another transmission.

5. A system as in claim 4, wherein:
a first stage of the at least one supplementary booster air compressor on the third pinion shaft is adapted to receive and further compress at least a portion of the flow of further compressed air transmitted from a second stage of the at least one booster air compressor, and
a second stage of the at least one supplementary booster air compressor on the third pinion shaft is adapted to receive and further compress at least a portion of a flow of further compressed air transmitted from the first stage of the at least one supplementary booster air compressor.

6. A system as in any preceding claim, further comprising:
at least one cooler, each cooler adapted to cool at least one of at least a portion of the flow of compressed air transmitted from the at least one pre-main air compressor, at least a portion of the flow of further compressed air transmitted from the at least one main air compressor, and at least a portion of a flow of further compressed air transmitted from the at least one booster air compressor.

7. A method for compressing air, comprising the steps of:
transmitting a flow of ambient air or other air to at least one pre-main air compressor having at least one stage;
driving the at least one pre-main air compressor with a variable speed driver having at least one drive shaft;
compressing the flow of ambient air or other air in the at least one pre-main air compressor, thereby producing a flow of compressed air from the at least one pre-main air compressor;
transmitting at least a portion of the flow of compressed air from the at least one pre-main air compressor to at least one main air compressor having at least one stage on a first pinion shaft;
compressing further the at least a portion of the flow of compressed air in the at least one main air compressor, thereby producing a flow of further compressed airfrom the at least one main air compressor;
transmitting at least a portion of the flow of further compressed air from the at least one main air compressor to at least one booster air compressor having at least one stage on a second pinion shaft;
compressing further the at least a portion of the flow of further compressed air in the at least one booster air compressor, thereby producing a flow of further compressed air from the at least one booster air compressor; and
driving at least one of the first pinion shaft and the second pinion shaft with at least one other driver directly or indirectly through at least one transmission.

8. A method as in claim 7, wherein:
a first stage of the at least one main air compressor on the first pinion shaft receives and further compresses the at least a portion of the flow of compressed air transmitted from the at least one pre-main air compressor at a pre-defined discharge pressure, and
a second stage of the at least one main air compressor on the first pinion shaft receives and further compresses at least a portion of a flow of further compressed air transmitted from the first stage of the at least one main air compressor.

9. A method as in claim 7 or 8, wherein:
a first stage of the at least one booster air compressor on the second pinion shaft receives and further compresses the at least a portion of the flow of further compressed air transmitted from the at least one main air compressor, and
a second stage of the at least one booster air compressor on the second pinion shaft receives and further compresses at least a portion of a flow of further compressed air transmitted from the first stage of the at least one booster air compressor.

10. A method as in any one of claims 7 to 9, comprising the further steps of:
transmitting at least a portion of the flow of further compressed air from the at least one booster air compressor to at least one supplementary booster air compressor having at least one stage on a third pinion shaft; and
compressing further the at least a portion of the flow of further compressed air from the at least one booster air compressor, thereby producing a flow of further compressed air from the supplementary booster air compressor;
wherein the at least one other driver or another driver drives at least one of another drive shaft, the first pinion shaft, the second pinion shaft, and the third pinion shaft directly or indirectly through the at least one transmission or another transmission.

11. A method as in claim 10, wherein:
a first stage of the at least one supplementary booster air compressor on the third pinion shaft receives and further compresses at least a portion of the flow of further compressed air transmitted from a second stage of the at least one booster air compressor, and
a second stage of the at least one supplementary booster air compressor on the third pinion shaft receives and further compresses at least a portion of a flow of further compressed air transmitted from the first stage of the at least one supplementary booster air compressor.

12. A method as in any one of claims 7 to 11, comprising the further step of:
cooling with at least one cooler at least one of at least a portion of the flow of compressed air transmitted from the at least one pre-main air compressor, at least a portion of the flow of further compressed air transmitted from the at least one main air compressor, and at least a portion of a flow of further compressed air transmitted from the at least one booster air compressor.

13. A system or method as in any preceding claim, wherein:
a first drive shaft of the variable speed driver drives a first pre-main air compressor at a variable speed, and
a second drive shaft of the variable speed driver drives a second pre-main air compressor at the variable speed.

14. A system or method as in any preceding claim, wherein at least one of the first pre-main air compressor and the second pre-main air compressor is a centrifugal air compressor.

15. A system or method as in any preceding claim, wherein the at least one transmission comprises at least one bull gear.

16. A system for compressing air according to claim 1, the system comprising:
a variable speed driver having a first drive shaft and a second drive shaft;
a first pre-main centrifugal air compressor having at least one stage and adapted to receive and compress a first flow of ambient air and to be driven at a first variable speed by the first drive shaft of the variable speed driver;
a second pre-main centrifugal air compressor having at least one stage and adapted to receive and compress a second flow of ambient air and to be driven at the first variable speed by the second drive shaft of the variable speed driver;
a manifold adapted to receive and combine at least a portion of a first flow of compressed air from the first pre-main centrifugal air compressor and at least a portion of a second flow of compressed air from the second pre-main centrifugal air compressor;
a main air compressor having
a first stage on a first pinion shaft and adapted to receive and further compress at least a portion of a flow of compressed air transmitted from the manifold at a pre-defined discharge pressure; and
a second stage on the first pinion shaft and adapted to receive and further compress at least a portion of a flow of further compressed air transmitted from the first stage of the main air compressor;
a booster air compressor having
a first stage on a second pinion shaft and adapted to receive and further compress at least a portion of a flow of further compressed air transmitted from the main air compressor, and
a second stage on the second pinion shaft and adapted to receive and further compress at least a portion of a flow of further compressed air transmitted from the first stage of the booster air compressor;
a supplementary booster air compressor having
a first stage on a third pinion shaft adapted to receive and further compress at least a portion of a flow of further compressed air transmitted from the second stage of the booster air compressor, and
a second stage on the third pinion shaft adapted to receive and further compress at least a portion of a flow of further compressed air transmitted from the first stage of the supplementary booster air compressor;
one other driver adapted to drive at least one of another drive shaft, the first pinion shaft, the second pinion shaft, and the third pinion shaft directly or indirectly through at least one of a bull gear and another transmission; and
at least one cooler, each cooler adapted to cool at least one of at least a portion of the first and second flows of compressed air transmitted from the first and second pre-main centrifugal air compressors, at least a portion of each flow of further compressed air transmitted from each stage of the main air compressor, at least a portion of each flow of further compressed air transmitted from each stage of the booster air compressor, and at least a portion of each flow of further compressed air transmitted from each stage of the supplementary booster air compressor.

17. A method for compressing air according to claim 7, the method comprising the steps of:
transmitting a first flow of ambient air to a first pre-main centrifugal air compressor having at least one stage;
driving the first pre-main centrifugal air compressor at a first variable speed with a first drive shaft of a variable speed driver;
transmitting a second flow of ambient air to a second pre-main centrifugal air compressor having at least one stage;
driving the second pre-main centrifugal air compressor at the first variable speed with a second drive shaft of the variable speed driver;
compressing the first flow of ambient air in the first pre-main centrifugal air compressor, thereby producing a first flow of compressed air at a pre-defined discharge pressure;
compressing the second flow of ambient air in the second pre-main centrifugal air compressor, thereby producing a second flow of compressed air at the pre-defined discharge pressure;
combining in a manifold at least a portion of the first flow of compressed air from the first pre-main centrifugal air compressor and at least a portion of the second flow of compressed air from the second pre-main centrifugal air compressor;
transmitting a flow of compressed air from the manifold to a main air compressor having a first stage on a first pinion shaft and a second stage on the first pinion shaft;
compressing further in the first stage of the main air compressor at least a portion of the flow of compressed air transmitted from the manifold;
compressing further in the second stage of the main air compressor at least a portion of a flow of further compressed air transmitted from the first stage of the main air compressor;
transmitting a flow of further compressed air from the main air compressor to a booster air compressor having a first stage on a second pinion shaft and a second stage on the second pinion shaft;
compressing further in the first stage of the booster air compressor at least a portion of the flow of further compressed air from the main air compressor;
compressing further in the second stage of the booster air compressor at least a portion of a flow of further compressed air transmitted from the first stage of the booster air compressor;
transmitting a flow of further compressed air from the booster air compressor to a supplementary booster air compressor having a first stage on a third pinion shaft and a second stage on the third pinion shaft;
compressing further in the first stage of the supplementary booster air compressor at least a portion of the flow of further compressed air from the booster air compressor;
compressing further in the second stage of the supplementary booster air compressor at least a portion of a flow of further compressed air transmitted from the first stage of the supplementary booster air compressor, thereby producing a flow of further compressed air from the supplementary booster air compressor;
driving at least one of another drive shaft, the first pinion shaft, the second pinion shaft, and the third pinion shaft with at least one other driver directly or indirectly through at least one of a bull gear and an other transmission; and
cooling with at least one cooler at least one of at least a portion of the first and second flows of compressed air transmitted from the first and second pre-main centrifugal air compressors, at least a portion of each flow of further compressed air transmitted from each stage of the main air compressor, at least a portion of each flow of further compressed air transmitted from each stage of the booster air compressor, and at least a portion of each flow of further compressed air transmitted from each stage of the supplementary booster air compressor.
